# EUROPÄISCHE PATENTSCHRIFT

(11) **EP 1 118 147 B1**
(45) Veröffentlichungstag und Bekanntmachung des Hinweises auf die Patenterteilung: **27.08.2008**
(21) Anmeldenummer: 99955778.8
(22) Anmeldetag: 23.09.1999
(51) Int. Cl.: H02K 5/14, H01R 39/38

(54) **BÜRSTENHALTERUNG FÜR EINEN KOMMUTATORMOTOR**
BRUSH HOLDER FOR A COMMUTATOR MOTOR
PORTE-BALAIS POUR MOTEUR A COLLECTEUR

(30) Priorität: 29.09.1998 DE 19844757; 03.02.1999 DE 29901843 U
(43) Veröffentlichungstag der Anmeldung: 25.07.2001
(73) Patentinhaber: Continental Automotive GmbH, 30165 Hannover (DE)
(72) Erfinder: HARTEL, Gerd, D-97273 Kürnach (DE); ZIEGLER, Thomas, D-97450 Arnstein (DE); DREXLMAIER, Thomas, D-97076 Würzburg (DE); REDELBERGER, Harald, D-97273 Kürnach (DE); WEILER, Theodor, D-97076 Würzburg (DE); HEIM, Norbert, D-97228 Rottendorf (DE); KÖNIG, Michael, D-97082 Würzburg (DE); SKUTSCHIK, Viktor, D-96450 Coburg (DE); WIEDEMANN, Christian, D-95482 Gefrees (DE); WAGNER, Michael, D-96317 Kronach (DE); LAUMER, Stefan, D-97320 Albertshofen (DE); SEUFFERT, Werner, D-97493 Bergrheinfeld (DE); STEEGMÜLLER, Horst, D-97076 Würzburg (DE)
(86) Internationale Anmeldenummer: PCT/DE1999/003053
(87) Internationale Veröffentlichungsnummer: WO 2000/019584

(56) Entgegenhaltungen:
- EP-A- 0 175 992
- EP-A- 0 767 525
- DE-C- 895 025
- FR-A- 2 644 013
- US-A- 2 954 492
- US-A- 4 086 034
- US-A- 4 293 789
- US-A- 4 501 983
- US-A- 4 785 214
- PATENT ABSTRACTS OF JAPAN vol. 1997, no. 08, 29. August 1997 (1997-08-29) & JP 09 098546 A (TOSHIBA CORP), 8. April 1997 (1997-04-08)
- PATENT ABSTRACTS OF JAPAN vol. 011, no. 304 (E-545), 3. Oktober 1987 (1987-10-03) & JP 62 095946 A (MORIYAMA KOGYO KK), 2. Mai 1987 (1987-05-02)

## Beschreibung

Die Erfindung bezieht sich auf eine Bürstenhalterung für ei-nen Kommutatormotor gemäß Patentanspruch 1; Kommutatormotoren dieser Art sind insbesondere für Stellantriebe in Kraftfahrzeugen vorgesehen und z.B. durch die EP 0 586 723 B1 bzw. die DE-OS 22 27 383 bekannt.

Bei den vorgenannten Bürstenhalterungen sind, vorzugsweise einstückig, an eine Kunststoff-Bürstentragplatte Bürstenkästen angespritzt, in die Bürsten führbar eingesteckt sind, die mit ihrem radial inneren Ende die Lamellenfläche des Kommutators beschleifen und auf deren radial äußeres Ende Schraubenfedern dadurch angedrückt sind, daß sie nach ihrer Montage in dem Bürstenkasten von einer am Einsteckende des Bürstenkastens fixierbaren Abdeckkappe unter Druck gestellt sind.

Bürstenandruckelemente in Form eines im wesentlichen quer zu dessen Andruckrichtung gespannten, auch im Sinne einer Spannkraft-Komponente in Andruckrichtung der Bürsten verlaufenden Spannelementes ist z.B. aus der JP 09 098546 A bekannt; dabei überspannt ein einziges Spannelement sämtliche Bürsten, sodass zu deren Stromzuführung jeweils eine gesonderte Anschlussleitung wie auch im Fall der DE 895 025 C vorgesehen ist, bei der jede Bürste durch eine Druckfeder, z.B. in Form einer quergespannten Blattfeder, gegen den Kommutator angedrückt ist.

Gemäß Aufgabe vorliegender Erfindung soll der fertigungs- und montagetechnische Aufwand für die Bürstenhalterung eines Kommutatormotors mittlerer bzw. kleiner Leistung gemindert werden können. Die Lösung dieser Aufgabe gelingt erfindungsgemäß durch eine Bürstenhalterung gemäß Patentanspruch 1; vorteilhafte Ausgestaltungen der Erfindung sind jeweils Gegenatand der Unteransprüche.

Bei der erfindungsgemäßen Halterung entfällt sowohl der Bauteileaufwand als auch der Montageaufwand für gesonderte, Mittel zum mechanischen Andruck und elektrischen Speisung der Bürsten. Nach einer Ausgestaltung der Erfindung werden die gleichzeitig zur Stromzuführung zu den Bürsten und gegebenenfalls auch als Halterungs- und Führungselemente für diese Bürsten benutzten Andruckelemente gebildet aus einem einer Bürste zugeordneten Spannelement aus einer deren eines freies Ende bildenden Stromzuführungslitze zu der Bürste und aus einem anschließenden, deren anderes freie Ende bildenden Zugelement, insbesondere in Form eines Federelementes; die freien Enden der Spannelemente sind auf einfache Weise an Stromzuführungskontakten bzw. Fixierungsnocken einer das Grundelement der Bürstenhalterung bildenden Bürstentragplatte fixiert.

Die Erfindung sowie weitere vorteilhafte Ausgestaltungen der Erfindung werden im folgenden anhand schematischer Ausführungsbeispiele in den Zeichnungen-näher erläutert; darin zeigen:
- FIG 1,2,3: in axialer Draufsicht auf eine Bürstenhalterung drei Ausführungsbeispiele eines Spannelementes, das gleichzeitig der Stromzuführung zu den Bürsten dient;
- FIG 4: einen Detailausschnitt aus FIG 3 im Schnittverlauf X-X;
- FIG 5-11: im Schnittverlauf verschiedene Ausführungen von aus der Bürstentragplatte vorstehenden Führungshilfen für die Bürsten.

Die in den Figuren dargestellten Bürstenhalteru.ngen weisen eine rähmenartige Bürstentragplatte 1 auf, die sämtliche wesentlichen Bauteile der Bürstenhalterung und gegebenenfalls Bürstenführung aufnimmt und im fertigmontierten Elektromotor kommutatorseitig vorzugsweise innerhalb des Motorgehäuses oder an einem Lagerschild fixierbar ist. Neben Entstördrosseln sind insbesondere Bürsten 2;3 an der Bürstentragplatte 1 geführt zu haltern und gegen die zu beschleifende Lamellenfläche eines in den Zeichnungen nur angedeuteten Kommutators anzudrücken.

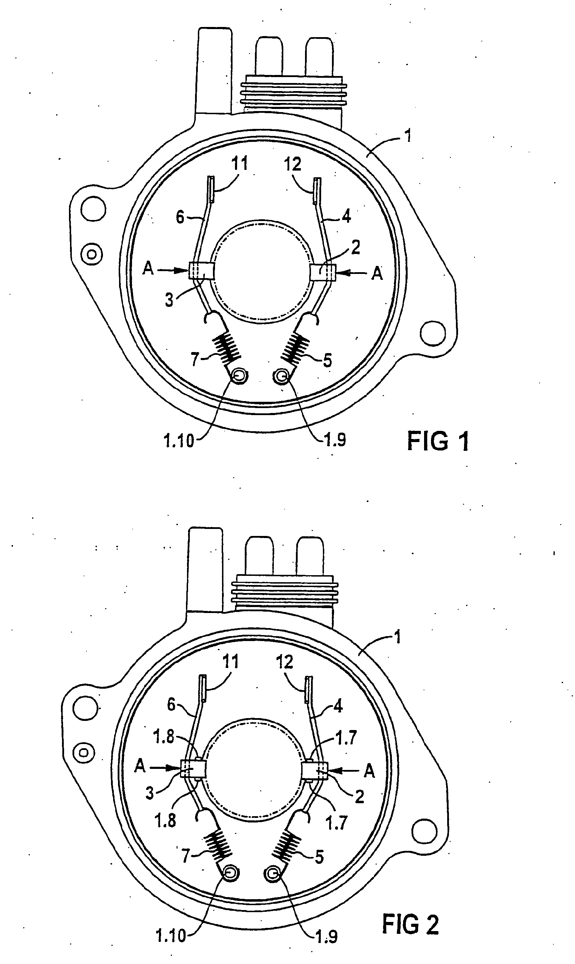

FIG 1-3 zeigen jeweils den Andruck der Bürsten 2;3 gegen den Kommutator in einer Andruckrichtung mit jeweils einer Bürste 2 bzw.3 zugeordnetem Spannelement 4;5 bzw.6;7 bzw.9;10, das gleichzeitig auch der Stromzuführung zu den Bürsten 2 bzw.3 dient.

Gemäß FIG 1,2 besteht jedes Spannelement aus einer das eine freie Ende bildende, mit einer Bürste 2 bzw.3 verbundenen Stromzuführungslitze 4 bzw.6 und einem das andere freie Ende bildenden Zugelement 5 bzw.7, insbesondere in Form einer Zugfeder. In fertigungs- und insbesondere montagetechnisch einfacher Weise ist das Ende jeweils einer Stromzuführungslitze 4 bzw.6 mit einem bürstenhalterungsseitig fixierten Stromzuführungskontakt 10 bzw.11 kontaktiert und das zugelementseitige Ende mit einer Federöse an einem bürsthalterungsseitigen Haltenocken 1.9;1.10 eingehängt.

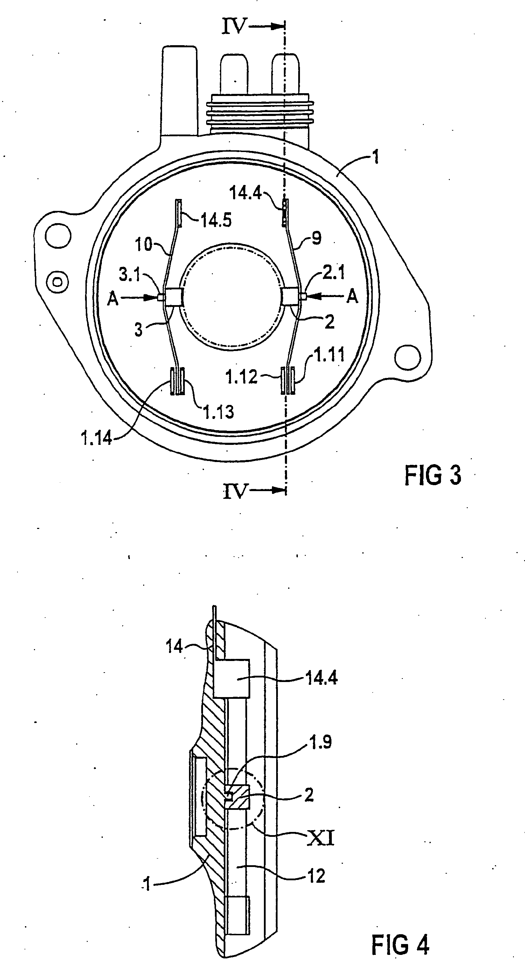

Gemäß FIG 3,4 ist als gleichzeitig stromzuführendes Spannelement je eine Blattfeder 9 bzw.10 vorgesehen, die zur Stromzuführung mit ihrem oberen Ende mit einem aus der Bürstentragplatte 1 vorstehenden Stromzuführungskontakt 14.4 bzw.14.5;10;11 eines in diese eingespritzten, an sich bekannten, stromleitenden Stanzgitters 14 kontaktiert, insbesondere angelötet, und mit ihrem unteren Ende zwischen zwei, vorzugsweise an die isolierende Bürstentragplatte 1 vorstehend angespritzten Führungsaufnahmen 1.11:1.12 bzw.1.13;1.14 einlegbar ist.

Nach einer Ausgestaltung der Erfindung können die Stromzuführungslitzen 4;6 bzw. die Blattfedern 9;10 im Sinne einer Bauteileinheit mit den Bürsten 2;3 jeweils derart integriert sein, daß das Spannelement gleichzeitig neben dem.Andruck der Bürste an die Lamellenschleiffläche des Kommutators auch - wie in FIG 1 angedeutet - der Führung dieser Bürsten dient. In diesem Fall ist die Stromzuführungslitze zweckmäßigerweise als Flachlitze, insbesondere mit einer Fläche entsprechend der Stärke der Bürste ausgebildet. Gemäß FIG 3 ist ein zusätzlicher radialer Fixierungsnocken 2.1;3.1 an der Bürste 2;3 vorgesehen, der in eine entsprechende Fixierungsöffnung in der Flachseite der Blattfeder 9;10 einsteckbar und gegebenenfalls mit dieser vernietbar ist.

FIG 2 zeigt in weiterer Ausgestaltung des Ausführungsbeispiels nach FIG 1 eine zusätzliche Führungshilfe für die Kohlebürsten 2;3 mittels seitlich anliegender, vorzugsweise einstückig an die Bürstentragplatte 1 vorstehend angespritzter Führungsstege "1.7;1.7. bzw.1.8;1.8.

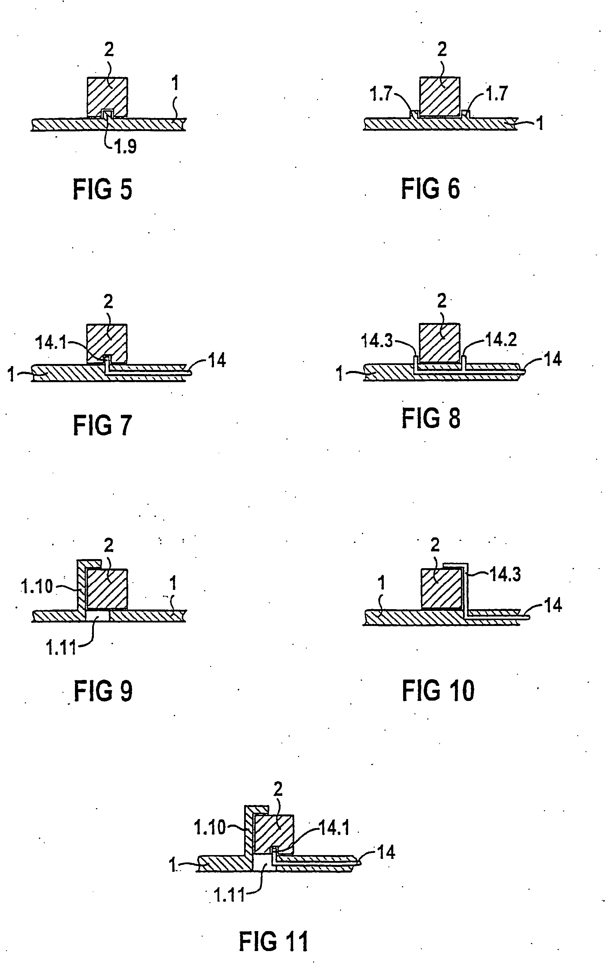

FIG 5-11 zeigen im Bereich des Detailausschnitts aus FIG 4 verschiedene vorteilhafte, von der Bürstentragplatte 1 vorstehende Führungshilfen, die ihrerseits fertigungstechnisch leicht, insbesondere einstückig, mit der Bürstentragplatte 1 oder mit einem darin eingegossenen, als Stromzuführung zu elektrischen bzw. elektronischen Bauteilen der Bürstentragplatte dienenden Stanzgitter 14, herstellbar und mit der jeweiligen Bürste montagetechnisch einfach, insbesondere durch Zusammenstecken, zusammenbaubar sind.

Im einzelnen zeigen FIG 5,6,9 und 11 verschiedene, jeweils einstückig an die Bürstentragplatte 1 angespitzte Führungsstege 1.9;1.7;1.10 bzw. FIG 7,8,10 und 11 gesonderte bzw. zusätzliche, an das Stanzgitter 14 einstückig angeformte Führungsstege 14.1;14.2;14.3; Führungsstege, die gleichzeitig als Stromzuführungsmittel sowie vorteilhaft als Wärmeabführungsmittel von den Bürsten mitbenutzt sind.

FIG 5 bzw. FIG 7 zeigen eine radiale Führungshilfe der Bürste 2 durch einen an die Bürstentragplatte 2 angespritzten Führungssteg 1.9 bzw. an das Stanzgitter 14 angeformten Führungssteg 14.1, der jeweils in eine korrespondierende Führungsnut der Bürste 2 eingreift; eine axiale Führung der Bürste erfolgt hierbei über einen entsprechenden Andruck des jeweiligen übergreifenden Spannelementes.

FIG 6 bzw. FIG 7 zeigen eine radiale Führung der Bürste durch entsprechend seitlich anliegende, an die Bürstentragplatte 1 angespritzte bzw. an das Stanzgitter 14 angeformte Führungsstege 1.7;1.7 bzw.14.2;14:2.

FIG 9 bzw. FIG 10 offenbaren einen halboffenen bürstenkastenartigen Führungssteg 1.10 als Teil der Bürstentragplatte 1 bzw. entsprechenden Führungssteg 14.3 als Teil des Stanzgitters 14. Der bürstenkastenartige Steg 1.10 bzw. 14.3 ist an der Seite der Bürste-vorgesehen, an welche die Bürste aufgrund der Drehrichtung des Kommutators zur Anlage kommt.

FIG 11 zeigt eine vorteilhafte Kombination der Führungshilfen bzw. Stromzuführungen bzw. Wärmeabführungen aus FIG 9 und FIG 7.

## Patentansprüche

1. Bürstenhalterung für einen Kommutatormotor
- mit mittels eines Andruckelementes gegen die Lamellenfläche eines Kommutators betriebsmäßig angedrückten Bürsten (2;3);
- mit einem Andruckelement in Form eines im wesentlichen quer zu dessen Andruckrichtung (A) gespannten, auch im Sinne einer Spannkraft-Komponente in Andruckrichtung der Bürsten (2;3) verlaufenden, jeweils einer einzelnen Bürste (2;3) zugeordneten Spannelementes (4,5;6,7:9,10);
- mit einer Stromzuführung zu den Bürsten (2;3) durch das jeweilige Andruckelement.

2. Bürstenhalterung nach Anspruch 1 und/oder 2
- mit einem bogen- bzw. gewölbeartig das kommutatorabgewandte Ende einer Bürste (2;3) jeweils überspannenden Spannelement (4,5;6,7:9,10).

3. Bürstenhalterung nach Anspruch 1 und/oder 2
- mit einem seil-bzw. bandartigen Spannelement (4,5; 6,7).

4. Bürstenhalterung nach Anspruch 1 und/oder 2
- mit einem Spannelement in Form einer Blattfeder (9,10).

5. Bürstenhalterung nach Anspruch 1 und/oder 2
- mit einem Spannelement (4,5;6,7) in Form einer dessen eines freie Ende bildenden Stromzuführungslitze (4;6) zu den Bürsten (2;3) und einem anschließenden, dessen anderes freie Ende bildenden Zugelementes (5;7), insbesondere Federelementes.

6. Bürstenhalterung nach Anspruch 5
- mit einer Integrierung der Stromzuführungslitze (4 bzw.6) und der Bürste (2 bzw.3) im Sinne einer Baueinheit (2,4 bzw. 3,6);
- mit einer Befestigung des Zugelementes (5 bzw.7) an der Baueinheit (2,4;3,6).

7. Bürstenhalterung nach zumindest einem der Ansprüche 1-6
- mit einer Fixierung bzw. Führung der freien Enden des eine Bürste (2;3) überspannenden Spannelementes (4,5 bzw. 6,7 bzw. 9,10) an einer Bürstenhalterung (1).

8. Bürstenhalterung nach zumindest einem der Ansprüche 1-7
- mit im Sinne einer, insbesondere axialen und/oder radialen, Führungshilfe für die Bürsten (2;3) ausgebildeten mittelbaren bzw. unmittelbaren Teilen der Bürstentragplatte (1).

9. Bürstenhalterung nach Anspruch 8
- mit aus der Bürstentragplatte (1) vorstehenden, in korrespondierende Führungsaufnahmen der Bürsten (2;3) eingreifenden Führungsstegen (1.9;14.1).

10. Bürstenhalterung nach Anspruch 8
- mit aus der Bürstentragplatte (1) vorstehenden, seitlich an den Bürsten (2;3) anliegenden Führungsstegen (1.7:1.7
- bzw. 14.2:14.2).

11. Bürstenhalterung nach Anspruch 8
- mit aus der Bürstentragplatte (1) vorstehenden, die Bürsten (2;3) zumindest teilweise bürstenkastenartig umfassenden Führungsstegen (1.10 bzw.14.3).

12. Bürstenhalterung nach zumindest einem der Ansprüche 8-11
- mit an die Bürstentragplatte (1), insbesondere einstückig, angespritzten Führungsstegen (1.7-1.10).

13. Bürstenhalterung nach zumindest einem der Ansprüche 8-12
- mit an ein, von der Bürstentragplatte (2;3) aufgenommenes, Stanzgitter (14), vorzugsweise einstückig, angeformten Führungsstegen (14.1-14.3).

14. Bürstenhalterung nach zumindest einem der Ansprüche 1-13
- mit einem Anschluß der als Stromzuführung mitbenutzten Spannelemente an Stromzuführungskontakte (11;12 bzw. 14.4;14.5) eines von der Bürstentragplatte (1) aufgenommenen, insbesondere eigegossenen, Stanzgitters (14).

## Claims

1. Brush holder for a commutator motor
- having brushes (2;3) operationally pushed against the multi-disk of a commutator by means of a pressure element;
- having a pressure element in the form of a tensioning element (4, 5; 6, 7; 9, 10) essentially tensioned at right angles to its direction of pressure (A), and also running in the direction of pressure of the brushes (2;3) in terms of a tension force component and being assigned to an individual brush (2; 3) in each instance;
- having a power supply line to the brushes (2;3) by means of the respective pressure element.

2. Brush holder according to claim 1 and/or 2
- having a curved and/or arched tensioning element (4, 5; 6, 7; 9, 10) spanning the end of a brush (2; 3) facing away from the commutator in each instance.

3. Brush holder according to claim 1 and/or 2,
- having a rope-like and/or strip-like tensioning element (4, 5; 6, 7)

4. Brush holder according to claim 1 and/or 2
- having a tensioning element in the form of a leaf spring (9, 10)

5. Brush holder according to claim 1 and/or 2,
- having a tensioning element (4, 5;6, 7) in the form of a power supply line wire (4;6) to the brushes (2; 3) forming its one free end and a connecting tie (5;7), in particular spring element, forming its other free end.

6. Brush holder according to claim 5,
- having an integration of the power supply line wire (4 and/or 6) and the brushes (2 and/or 3) in terms of an assembly (2, 4 and/or 3, 6)
- having a fastening of the connecting tie (5 and/or 7) to the assembly (2, 4; 3, 6).

7. Brush holder according to at least one of claims 1 - 6
- having a fixing and/or guidance of the free ends of the tensioning element (4, 5 and/or 6, 7 and/or 9, 10) spanning a brush (2;3) on a brush holder (1).

8. Brush holder according to at least one of claims 1-7
- having parts of the brush holder plate (1) which are directly and indirectly embodied in terms of a particularly axial and/or radial guidance aid for the brushes (2; 3).

9. Brush holder according to claim 8,
- having guidance bars (1, 9; 14, 1) protruding from the brush carrier plate (1) and engaging in corresponding guidance recesses of the brushes (2;3).

10. Brush holder according to claim 8,
- having guidance bars (1.7; 1.7 and/or 14.2; 14.2) protruding from the brush carrier plate (1) and resting laterally against the brushes (2; 3).

11. Brush holder according to claim 8,
- having guidance bars (1.10 and/or 14.3) protruding from the brush carrier plate (1) and at least partially surrounding the brushes (2; 3) in the manner of a brush holder box.

12. Brush holder according to at least one of claims 8-11
- having guidance bars (1.7-1.10) overmoulded onto the brush carrier plate (1), in particular in one piece.

13. Brush holder according to at least one of claims 8-12
- having guidance bars (14.1-14.3) overmoulded, preferably in one piece, onto a lead frame (14) accommodated by the brush carrier plate (2; 3).

14. Brush holder according to at least one of claims 1-13
- having an attachment of the tensioning elements used as the power supply line to power supply line contacts (11;12 and/or 14.4; 14.5) of a lead frame (14), in particular integrally cast, accommodated by the brush carrier plate (1).

## Revendications

1. Porte-balais pour un moteur à collecteur, comprenant
- des balais (2 ; 3) qui sont pressés en service contre la surface des lames d'un collecteur au moyen d'un élément de pression ;
- un élément de pression constitué par un élément de serrage (4, 5 ; 6, 7 ; 8 ; 9, 10), tendu sensiblement transversalement à sa direction de pression (A), et s'étendant aussi de façon à exercer une composante de force de serrage dans la direction de pression des balais (2 ; 3), associé à chaque fois à un balai individuel (2 ; 3) ;
- une amenée du courant aux balais (2 ; 3) à travers l'élément de pression respectif.

2. Porte-balais selon la revendication 1 et/ou 2, comprenant
- un élément de serrage (4, 5 ; 6, 7 ; 9, 10) qui recouvre en arc ou en voûte à chaque fois l'extrémité d'un balai (2 ; 3) qui est éloignée du collecteur.

3. Porte-balais selon la revendication 1 et/ou 2, comprenant
- un élément de serrage (4, 5 ; 6, 7 ; 9 ; 10) du genre cordon ou ruban.

4. Porte-balais selon la revendication 1 et/ou 2, comprenant
- un élément de serrage ayant la forme d'un ressort lame (9, 10).

5. Porte-balais selon la revendication 1 et/ou 2, comprenant
- un élément de serrage (4, 5 ; 6, 7) formé d'un fil (4 ; 6) d'amenée du courant aux balais (2 ; 3) qui en forme une extrémité libre et d'un élément de traction (5 ; 7), en particulier d'un élément élastique, qui s'y raccorde et qui en forme l'autre extrémité libre.

6. Porte-balais selon la revendication 6, comportant
- une intégration du fil d'amenée du courant (4 ou 6) et des balais (2 ; 3) en une unité modulaire (2, 4 ou 3, 6) ;
- une fixation de l'élément de traction (5 ou 7) à l'unité modulaire (2, 4 ; 3, 6).

7. Porte-balais selon au moins une des revendications 1-6, comportant
- une fixation ou un guidage des extrémités libres de l'élément de serrage (4, 5 ou 6, 7 ou 9, 10) qui recouvre un balai (2 ; 3) par rapport au porte-balais (1).

8. Porte-balais selon au moins une des revendications 1-7, comprenant
- des parties directes ou indirectes de la plaque (1) de support des balais, conformées pour constituer une aide au guidage, en particulier axial et/ou radial, pour les balais (2 ; 3).

9. Porte-balais selon la revendication 8, comprenant
- des nervures de guidage (1.9, 14.1) qui font saillie sur la plaque (1) de support des balais, et qui s'engagent dans des évidements de guidage correspondants des balais (2 ; 3).

10. Porte-balais selon la revendication 8, comprenant
- des nervures de guidage (1.7 ; 1.7 ou 14.2 ; 14.2) qui font saillie sur la plaque (1) de support des balais et qui portent latéralement contre les balais (2 ; 3).

11. Porte-balais selon la revendication 8, comprenant
- des nervures de guidage (1.10 ou 14.3) qui font saillie sur la plaque (1) de support des balais, et qui entourent au moins partiellement les balais (2 ; 3) en forme de boîtes à balais.

12. Porte-balais selon au moins une des revendications 8-11, comprenant
- des nervures de guidage (1.7-1.10), en particulier en une seule pièce, venues de moulage., avec la plaque (1) de support de balais

13. Porte-balais selon au moins une des revendications 8-12, comprenant
- des nervures de guidage (14.1-14.3), formées de préférence d'une seule pièce, venues de formage, sur une grille découpée (14) contenue dans la plaque (2 ; 3) de support de balais,

14. Porte-balais selon au moins une des revendications 6-17, comportant
- un raccordement des éléments de serrage, utilisés en même temps pour l'amenée du courant, à des contacts d'amenée du courant (11 ; 12 ou 14.4 ; 14.5) d'une grille découpée (14) contenue, en particulier coulée, dans la plaque (1) de support des balais.
